# EUROPEAN PATENT APPLICATION

(11) **EP 2 345 349 A1**
(43) Date of publication of application: **20.07.2011**
(21) Application number: 10000295.5
(22) Date of filing: 14.01.2010
(51) Int. Cl.: A47G 27/02

(54) **Ergonomic mats with prints and method for making such mats**

(71) Applicant: Ergomat A/S, 5471 Søndersø (DK)
(72) Inventor: Kryger, Mogens, 5230 Odense M (DK); Vinbech Therkelsen, Michael, 5260 Odense S (DK)
(74) Representative: Sundien, Thomas

(57) **Abstract**

A mat as a support for persons in a standing working posture, where said mat comprises an elastic base (201) part and further a top layer (203) of foil being at least partly integrated with said elastic base part (201), where a print is printed on said foil. The invention also concerns a method for making such a mat.

## Description

The invention concerns an ergonomic mat as support for persons in a standing or walking working posture, said mat having a print printed on it, and a method for making such a mat. The mat comprises a base made of an elastic material, and on top of that an integrated layer of foil is provided. The print is printed on the foil layer, and afterwards the foil layer with the print is moulded together with the base made of an elastic material in a moulding form.

### Background

Ergonomic mats as support for persons in a standing or walking working posture are for example described in the European patent EP 800 358 B1 disclosing a carrier layer with a pattern of extending portions on both the upper- and the under-side.

Flexible ergonomic mats are usually made of flexible polyurethane. Polyurethane is also known as PUR and covers a comprehensive material group, which can be divided into two main groups: Rigid and flexible polyurethanes. Polyurethanes are produced by the polyaddition reaction of a polyisocyanate with a polyalcohol (polyol) in the presence of a catalyst and other additives. The flexible polyurethane foam is moulded into any desired shape, in this case mats. Since the mats are manufactured by moulding the polyurethane material, the visual appearances of such mats are mats with a single colour such as black, the colour being added to the polyol before mixing with the isocyanate.

Ergonomic mats are used at a large variety of locations; at work places in the industry or offices and shops, just to mention a few. Such mats stimulate blood circulation and prevent cramps, reduce tiredness and increase work place safety; they also improve work environment and increase job satisfaction. As mentioned above, such flexible mats are usually plain coloured as a consequent of the manufacturing method. A method of providing a print to the surface of a mat could be an important asset since it could result in mats being sponsored by commercial partners.

The display of information on floor mats is known from WO 2005/025860 A1. The mats disclosed herein are composed of a print printed on a print layer, where a protective layer is applied on top of the print. Since the print is carried out on a print layer, a base layer and an adhesive is applied underneath the print layer enabling that the mat does not skid when persons are standing or walking on the mat. Also, on top of the protective layer a wear resistant layer is laminated enabling friction and reducing skid. Such mats are made of multiple layers of different kinds of materials, and therefore the appertaining manufacturing method is cumbersome.

### Object and description of the invention

The present invention provides a mat as a support for persons in a standing working posture, said mat comprising an elastic base part **characterised in that** the mat further comprises a top layer of foil being at least partly integrated with said elastic base part, where a print is printed on said foil.

Since the mats are made of an elastic material they stimulate blood circulation, prevent cramps, reduce tiredness, counteract fatigue and injuries to legs and spine, and the persons standing or walking on the mat during work will experience a soft and elastic feeling which improves work environment and increases job satisfaction.

A mat with print on it is an important asset since it could result in mats being sponsored by commercial partners. Also, a lot of specific info could be presented on the mat. The print can be any print decided by the purchaser. The mat can resist excessive wear from the standing user.

If the print was just added to the surface of the base part of the mat, it would be worn off rather quickly by the user standing and working on the mat. In the present invention the print is printed on the thin foil layer rather than on the thicker base part of the mat. Printing on a thin foil layer is easy to handle and facilitates the manufacturing of a mat with a print displayed on the surface.

The foil is a flexible material as is the elastic base part material, and the two materials will at least partly integrate with each other during the chemical process that takes place when the two materials are combined in the moulding form.

In one or more embodiments the elastic base part is made of polyurethane foam. The flexible polyurethane foam is a well known material and can be moulded into any desired shape, in this case mats.

In one or more embodiments the foil is transparent. When the foil is transparent it enables that the print will be visible at the surface of the mat; also when the print is printed on the bottom side of said foil.

In one or more embodiments the foil is a thermoplastic polyurethane foil. Thermoplastic polyurethane foil is a flexible material, and the polyurethane foam and the thermoplastic polyurethane foil are similar materials that will integrate with each other during the chemical process that takes place when the two materials are combined in the moulding form. Since the two materials integrate so well, the result is a mat where the separate layers are invisible. One would have to cut the mat in two to be able to see that the mat comprises a foil layer and an elastic base part.

In one or more embodiments the print is printed on the top side of said foil and in one or more embodiments the print is printed on the bottom side of said foil, said foil being transparent. In both cases the result is a wear stable print, but in the case where the print is printed on the bottom side of the transparent foil layer, the result is better and the print can last longer. If the print was just added to the surface of the base part of the mat, it would be worn off rather quickly by the user standing and working on the mat.

In one or more embodiments the mat comprises a pattern of closely spaced upwardly extending portions on the upper side of said mat, and in one or more embodiments the mat comprises a pattern of closely spaced upwardly extending portions on the bottom side of said mat. A pattern of closely spaced upwardly extending portions on either or both the upper and bottom side of the mat gives the persons standing or walking on the mat during work a soft and elastic feeling to counteract fatigue and injuries to legs and spine. This pattern can be any pattern and the specific pattern of a mat is decided by the moulding form used.

The invention also provides a method of producing a mat as a support for persons in a standing working posture, comprising an elastic base part and a top layer of foil, where a print is printed on said foil, **characterized in that** the print is printed on the foil, where after said foil with the print printed thereon is moulded at least partly together with the elastic base material making up the base of the mat in a moulding form.

The foil is a flexible material as is the elastic base part material and the two materials will at least partly integrate with each other during the chemical process that takes place when the two materials are combined in the moulding form. Since the two materials integrate well, the result is a mat where the separate layers are invisible. One would have to cut the mat in two to be able to see that the mat comprises a foil layer and an elastic base part.

A method of providing a print to the surface of a mat could be an important asset since it could result in mats being sponsored by commercial partners. In one or more embodiments of the method the elastic base material is polyurethane foam. The flexible polyurethane foam is a well known material and can be moulded into any desired shape, in this case mats.

In one or more embodiments of the method the foil is transparent.

In one or more embodiments of the method the foil is a thermoplastic polyurethane foil. Thermoplastic polyurethane foil is a flexible material and the polyurethane foam and the thermoplastic polyurethane foil are similar materials that will integrate with each other during the chemical process that takes place when the two materials are combined in the moulding form. Since the two materials integrate so well, the result is a mat where the layers are invisible. One would have to cut the mat in two to be able to see that the mat comprises a foil layer and an elastic base part.

In one or more embodiments of the method the print is printed on the top side of said foil and in one or more embodiments of the method the print is printed on the bottom side of said foil, said foil being transparent. In both cases, the result is a wear stable print, but in the case where the print is printed on the bottom side of the transparent foil layer, the result is better and the print can last longer. If the print was just added to the surface of the base part of the mat, it would be worn off rather quickly by the user standing and working on the mat.

In one or more embodiments of the method the moulding form is separated in two parts, an upper part and a lower part. The foil layer with the print is placed in the lower part of the moulding form and afterwards the upper part of the moulding form is placed on top of the lower part of the moulding form. After the two parts of the moulding form have been joint and sealed and the foil layer with the print is applied correctly inside the moulding form, the elastic material making up the base of the mat is injected into the moulding form. The elastic material is being injected under pressure and both the moulding form and the elastic material is heated before the moulding process, so that both the material and the moulding form are warm during the process. In one embodiment the elastic material is polyurethane foam. The elastic material hardens and integrates with the foil layer, during a chemical process, so that the two parts become one, resulting in a mat with a print displayed on the surface side that can resist wear from the users standing on the mat.

In one or more embodiments of the method the upper part of said moulding form comprises a pattern of closely spaced upwardly extending portions and in one or more embodiments the lower part of said moulding form comprises a pattern of closely spaced upwardly extending portions. If the moulding form has a pattern on either or both the lower part and the upper part of the moulding form, the finished mat will appear with a pattern on either or both the upper and bottom side. A pattern on the upper and/or bottom side of the mat gives the persons standing or walking during work a soft and elastic feeling to counteract fatigue and injuries to legs and spine since the mat yields resiliently. Because of the resulting better standing comfort, this enables that the users can work for more hours without feeling pain. Besides, a pattern on the bottom side can also increase the friction between the floor and the mat providing antiskid properties. Also, as the contact with the floor is minimized, the sites for growth of bacteria, fungi and microorganisms are minimized. The pattern on the upper side of the mat, dependent on the design, also provides antiskid properties so that the person standing on the mat either achieves good friction contact with the mat or achieves less friction contact, dependent on the working position of that person. For example, if a person has to turn around him or herself during work, a mat with less friction contact is wanted.

### Brief description of the drawings

Embodiments of the invention will be described more fully below with reference to the accompanying drawings, in which;
Figure 1 a and 1 b show a mat seen directly from above,
Figure 2a and 2b show a mat seen directly from the side,
Figure 3 shows the foil layer,
Figure 4 shows the moulding form for the manufacturing of a mat according to the invention, and
Figure 5 shows the moulding form for the manufacturing of a mat according to the invention where the foil is placed in the moulding form.

### Description of preferred embodiments

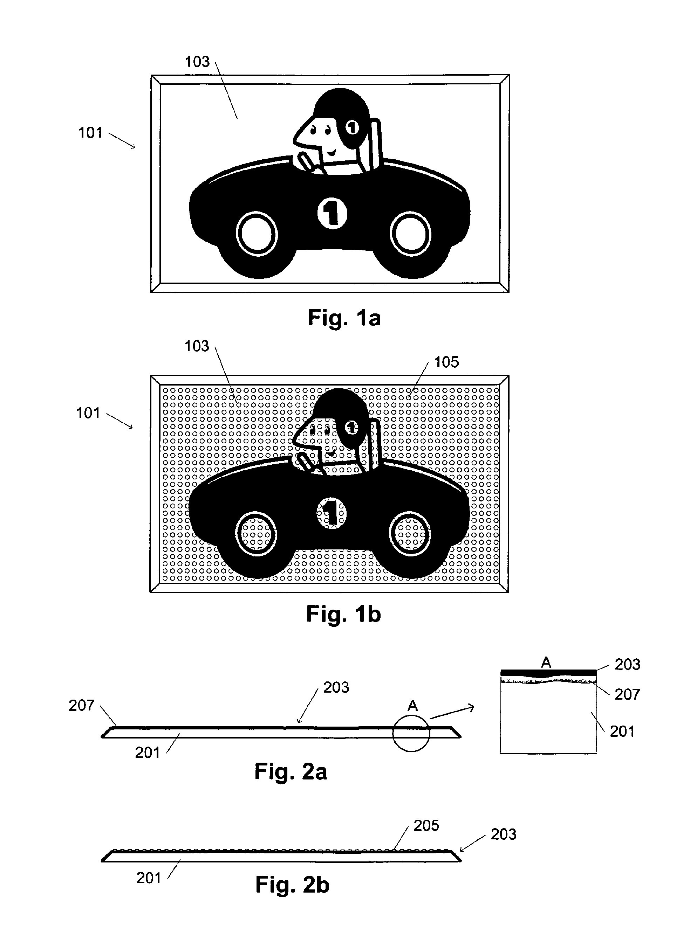

Figure 1 a shows a mat 101 according to the invention seen directly from above. The upper side displays a print 103, the print can be any print decided by the purchaser. The print is printed on a layer of foil (the foil layer itself is not visible on the figure), and afterwards the foil layer with the print is moulded together with a base made of an elastic material in a moulding form. Moulding is the process of manufacturing a lot of different things by shaping pliable raw material using a moulding form. The moulding form is a hollow structure that is filled with the material that hardens or sets inside the mould, adapting to the shape of the mould. In this case it is the layer of foil with the print printed thereon that is moulded together with the elastic material that makes up the base of the mat. By moulding the materials together, the mats will end up having the shape of the moulding form used. Any desired shape is possible, depending on the moulding form used.

Figure 1b shows a mat 101 according to the invention seen directly from above. The upper side displays a print 103. The print can be any print decided by the purchaser. The upper side also has a pattern of closely spaced upwardly extending portions 105 giving the persons standing or walking during work a soft and elastic feeling to counteract fatigue and injuries to legs and spine. This pattern can be any pattern and the specific pattern of a mat is decided by the moulding form used.

Figure 2a shows a mat seen directly from the side comprising a base 201 made of an elastic material and a layer of foil 203 onto which the print is printed before the foil layer with the print is at least partly integrated with the base made of an elastic material in a moulding form. The encircled area A is enlarged so that the integration surface 207 can be seen. The foil 203 and the elastic base part material 201 are at least partly integrated 207 with each other. The integration of the two materials happens during the chemical process that takes place when the two materials are combined in the moulding form. During the moulding process the elastic material hardens and the two materials will integrate with each other, meaning that they will chemically bond to each other along the integration interface 207 between the two materials. Since the two materials integrate well, the result is a mat where the separate layers are invisible when you look at the mat. One would have to cut the mat in two to be able to see that the mat comprises a foil layer and an elastic base part.

Since the mats are manufactured of an elastic material they stimulate blood circulation, prevent cramps, reduce tiredness, counteract fatigue and injuries to legs and spine and the persons standing or walking on the mat during work will experience a soft and elastic feeling which improves work environment and increases job satisfaction.

Figure 2b shows a mat seen directly from the side, said mat comprising a base 201 made of an elastic material and a layer of foil 203 onto which the print is printed before the foil layer with the print is moulded together with the base made of an elastic material in a moulding form. The upper side of the mat has a pattern of closely spaced upwardly extending portions 205 giving the persons standing or walking during work a soft and elastic feeling to counteract fatigue and injuries to legs and spine. The pattern on the upper side of the mat can be any pattern and the specific pattern of a mat is decided by the shape of the moulding form used.

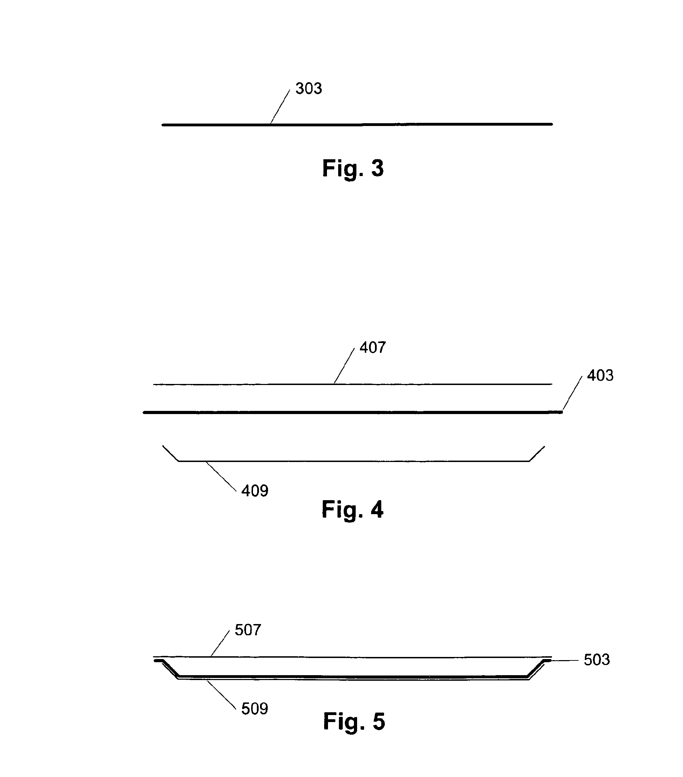

Figure 3 shows the foil layer 303. The print is printed on the foil layer, either on the top side or on the bottom side. The foil layer can be transparent. If the print is printed on the bottom side of the foil, the foil is transparent. IN both cases, the result is a wear stable print, but in the case where the print is printed on the bottom side of the transparent foil layer, the result is better and the print can last longer.

Figure 4 shows the moulding form 407, 409 separated in two parts, the upper part 407 and the lower part 409, and with a foil layer 403 with a print on placed between the two parts of the moulding form. The moulding form can have a pattern (not shown on the figure) on both the lower part and the upper part of the moulding form giving the finished mat a pattern on both the upper and the bottom side. A pattern on the upper side of the mat gives the persons standing or walking during work a soft and elastic feeling to counteract fatigue and injuries to legs and spine since the mat yields resiliently. Because of the resulting better standing comfort, this enables that the users can work for more hours without feeling pain. The bottom side of the mat can also have a pattern of closely spaced upwardly extending portions which can increase the friction between the floor and the mat providing antiskid properties. Also, as the contact with the floor is minimized, the sites for growth of bacteria, fungi and microorganisms are minimized.

If the mat is constructed with a pattern on both the upper and bottom side it can contribute to improve the good elastic properties of the mat. One embodiment of the mat has a miner overlap of the portions on the upper side and the bottom side.

The geometry of the upwardly extending portions may vary and does not have to be the same on the upper side and the bottom side. Examples of shapes include spherical segments, rectangular, cones, polygons and elongate portions, just to mention a few.

Figure 5 shows the moulding form 507, 509, where the upper part 507 and the lower part 509 are joined with a foil layer 503 with a print on placed between the two parts of the moulding form. The foil layer with the print is placed in the lower part of the moulding form 509 and afterwards the upper part of the moulding form is placed on top of the lower part of the moulding form. After the two parts of the moulding form have been joint and sealed and the foil layer with the print is applied correctly inside the moulding form, the elastic material making up the base of the mat is injected in the moulding form. The elastic material is injected under pressure and both the moulding form and the elastic material is heated before the moulding process so that both the material and the moulding form are warm during the process. In one embodiment the elastic material is polyurethane foam. The elastic material hardens and integrates with the foil layer, during a chemical process, so that the two parts become one, resulting in a mat with a print displayed on the surface side that can resist wear from the users standing on the mat. By moulding the materials together the mats will end up having the shape of the moulding form used. Any desired shape is possible, depending on the moulding form used.

If the moulding form has a pattern (not shown on the figure) on either or both the lower part and the upper part of the moulding form, the finished mat will appear with a pattern on either or both the upper and bottom side. As mentioned above, a pattern on the upper side of the mat gives the persons standing or walking during work a soft and more elastic feeling to counteract fatigue and injuries to legs and spine since the mat yields resiliently. Because of the resulting better standing comfort, this enables that the users can work for more hours without feeling pain. If the bottom side of the mat has a pattern it can also bring more softness and elasticity to the mat further enhancing the standing comfort. Besides, it can increase the friction between the floor and the mat providing antiskid properties. Also, as the contact with the floor is minimized, the sites for growth of bacteria, fungi and microorganisms are minimized.

## Claims

1. A mat as a support for persons in a standing working posture, said mat comprising an elastic base part **characterised in that** the mat further comprises a top layer of foil being at least partly integrated with said elastic base part, where a print is printed on said foil.

2. A mat according to claim 1, wherein said elastic base part is made of polyurethane foam.

3. A mat according to claims 1-2, wherein said foil is a thermoplastic polyurethane foil.

4. A mat according to claims 1-3, wherein said print is printed on the top side of said foil.

5. A mat according to claims 1-3, wherein said print is printed on the bottom side of said foil, said foil being transparent.

6. A mat according to claims 1-5, comprising a pattern of closely spaced upwardly extending portions on the upper side of said mat.

7. A mat according to claims 1-6, comprising a pattern of closely spaced upwardly extending portions on the bottom side of said mat.

8. A method of producing a mat as a support for persons in a standing working posture, said mat comprising an elastic base part and a top layer of foil, where a print is printed on said foil, **characterized in that** the print is printed on the foil, where after said foil with the print printed thereon is moulded at least partly together with the elastic base material making up the base of the mat in a moulding form.

9. A method of producing a mat according to claim 8, wherein said elastic
base material is polyurethane foam.

10. A method of producing a mat according to claims 8-9, wherein said foil is
a thermoplastic polyurethane foil.

11. A method of producing a mat according to claims 8-10, wherein said print
is printed on the top side of said foil.

12. A method of producing a mat according to claims 8-10, wherein said print
is printed on the bottom side of said foil, said foil being transparent.

13. A method of producing a mat according to claims 8-12, wherein said
moulding form is separated in two parts, an upper part and a lower part.

14. A method of producing a mat according to claim 13, wherein said upper
part of said moulding form comprises a pattern of closely spaced upwardly extending portions.

15. A method of producing a mat according to claims 13-14, wherein said
lower part of said moulding form comprises a pattern of closely spaced upwardly extending portions.
